# EUROPÄISCHE PATENTSCHRIFT

(11) **EP 0 704 545 B1**
(45) Veröffentlichungstag und Bekanntmachung des Hinweises auf die Patenterteilung: **16.12.1998**
(21) Anmeldenummer: 95113466.7
(22) Anmeldetag: 28.08.1995
(51) Int. Cl.: C22C 21/00, B32B 15/01, B23K 20/227

(54) **Gleitlager-Werkstoff**
Material for slide bearings
Matériau pour paliers à glissement

(30) Priorität: 29.09.1994 DE 4434801
(43) Veröffentlichungstag der Anmeldung: 03.04.1996
(73) Patentinhaber: KS Gleitlager GmbH, 68789 St. Leon-Rot (DE)
(72) Erfinder: Deicke, Klaus, D-74257 Untereisesheim (DE); Pfestorf, Harald, D-74257 Untereisesheim (DE); Schubert,Werner, D-69168 Wiesloch (DE); Steffens, Thomas, Dr., D-60437 Frankfurt am Main (DE)
(74) Vertreter: Dreiss, Fuhlendorf, Steimle & Becker, Patentanwälte

(56) Entgegenhaltungen:
- EP-A- 0 205 893
- DD-A- 50 319
- DE-A- 1 427 370
- DE-B- 1 063 005
- DE-B- 1 191 114
- DE-B- 1 521 196

## Beschreibung

Die Erfindung betrifft einen Gleitlager-Werkstoff, aufgebaut aus einer Stützschicht aus Stahl und einer darauf aufplattierten Schicht eines Aluminium-Lagerwerkstoffs.

Die komplexen Anforderungen für die Lagerung von bewegten Teilen, insbesondere von Verbrennungskraftmaschinen, wie beispielsweise Kurbelwellen und Pleuelstangen, zwingen zum Einsatz von Mehrschicht-Gleitlager-Werkstoffen, bestehend aus einer Stützschicht aus Stahl und einer darauf aufgebrachten Schicht eines Lagerwerkstoffs, ggf. kann zwischen diesen Komponenten eine weitere Schicht angebracht sein. Für höhere Belastungen hat sich insbesondere die Kombination von Stahl/Aluminium-Lagerwerkstoffen bewährt, die eine ausreichende Funktionssicherheit unter allen Betriebszuständen besitzen und vergleichsweise kostengünstig herstellbar sind. Bei hohen Gleitgeschwindigkeiten, wie diese beispielsweise bei Haupt- und Pleuellagern von modernen Verbrennungskraftmaschinen auftreten, ist in den allermeisten Fällen zusätzlich noch eine galvanisch aufgebrachte Laufschicht, bestehend aus PbSn10Cu, erforderlich.

Für die Herstellung gerollter Buchsen für Gleitlager ist in der Norm ISO 4383 ein Aluminium-Lagerwerkstoff mit dem Werkstoff-Kurzzeichen AlSn20Cu und der Zusammensetzung
17,5 bis 22,5 Gew.-% Zinn
0,7 bis 1,3 Gew.-% Kupfer
Rest Aluminium beschrieben, bei dem in der Aluminium-Kupfer-Matrix Zinn eingelagert ist. Diese Legierung kann noch jeweils bis zu 0,7 % Si, 0,1 % Mg, 0,1 % Ni, 0,2 % Ti, 0,7 % Fe, 0,7 % Mn und Sonstige zusammen 0,5 % enthalten. Im Verbund mit einer Stützschicht aus Stahl hat dieser Aluminium-Lagerwerkstoff eine beachtliche Bedeutung erlangt, weil dieser meist zur Lagerung in Verbrennungskraftmaschinen ohne Gleitschicht eingesetzt werden kann. Dieser Vorteil bedeutet allerdings ein Zugeständnis an die Belastbarkeit der aus diesem Gleitlager-Werkstoff hergestellten Gleitelemente. Die Ermüdungsfestigkeit ist mit 35 bis 45 N/mm² etwas geringer als diejenige von Stahl/Bleibronze-Lagerwerkstoffen, die ebenfalls häufig zur Lagerung in Verbrennungskraftmaschinen eingesetzt werden. Die aus dem Lagerwerkstoff Stahl/AlSn20Cu gefertigten Gleitelemente und Anlaufscheiben besitzen gute Gleiteigenschaften, einen relativ geringen Verschleiß und sind für Einsätze bei mittlerer Belastung - bis 40 N/mm² spezifische Belastung - gut geeignet. Hervorzuheben ist ferner die weitgehende Unempfindlichkeit gegenüber Kantenträgern und der gute Selbstheileffekt bei Schmutzriefen.

Aus der DE-B-1 521 196 sind dem vorstehend beschriebenen Gleitlager-Werkstoff vergleichbare Werkstoffe sowie solche mit einem geringeren Zinngehalt bekannt. Es wird empfohlen, die Gleitlager-Werkstoffe vor der Weiterverarbeitung zu Lagern bei 230 bis 425°C zu tempern.

Die DD-A-50 319 schlägt ein Verfahren zur Herstellung von Gleitkörpern aus Aluminium-Legierungen mit bis zu 30 % Zinn und 3 % Kupfer vor, wonach die abgegossene Legierung rasch mit Wasser auf Raumtemperatur abgekühlt, hiernach bis zu 30 % verformt, dann eine Stunde bei 350°C wärmebehandelt anschließend weiterverformt und sodann bei 220°C bei 18 Stunden gehalten wird, um eine Maßgenauigkeit der Legierung zu erreichen.

Es ist die Aufgabe der vorliegenden Erfindung, einen Gleitlager-Werkstoff, bestehend aus einer Stahlschicht mit einem darauf aufplattierten Lagerwerkstoff aus Aluminium-Kupfer-Matrix mit feinverteilt eingelagertem Zinn, ohne galvanische Gleitschicht (overlay-frei) bereitzustellen, der eine Ermüdungsfestigkeit von wenigstens 55 N/mm² besitzt und der im übrigen die guten mechanisch-technologischen Eigenschaften des Stahl/AlSn20Cu-Gleitlager-Werkstoffs aufweist.

Die Lösung dieser Aufgabe erfolgt durch die im Anspruch 1 angegebenen Merkmale. Vorteilhafte Ausführungsformen der Erfindung sind in den Unteransprüchen wiedergegeben.

Zur Herstellung des erfindungsgemäßen Gleitlager-Werkstoffs werden das kaltgewalzte Stahlband und das kaltgewalzte Aluminium-Lagerwerkstoffband gleichzeitig im Durchlaufverfahren entfettet, geschliffen bzw. gebürstet und im Plattierwalzwerk miteinander verbunden. Beim Plattieren im Walzwerk werden unter Druckbelastung der Stahl und der Aluminium-Lagerwerkstoff unterschiedlich stark verformt. Die dadurch entstehende Relativbewegung verursacht die Reibschweißung der beiden Werkstoffkomponenten. Die Verformung des Stahls und des Aluminium-Lagerwerkstoffs beträgt mindestens 45 %. Nach dem Abkühlen und Aufhaspeln des Stahl-Aluminium-Lagerwerkstoffbandes wird dieses einer 2 bis 12 Stunden dauernden Wärmebehandlung bei Temperaturen von 200 bis 220°C unterzogen, wobei die Bindung zwischen dem Stahl und dem Aluminium-Lagerwerkstoff durch einen Diffusionsprozeß gesteigert wird und das nach dem Plattieren in aller Regel in der Aluminium-Kupfer-Matrix zeilenförmig vorliegende Zinn sehr fein in der Matrix verteilt.

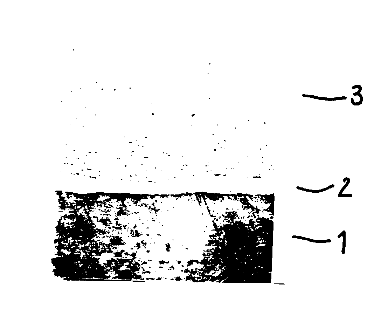

In der Zeichnung ist ein Gefügebild eines aus drei Schichten bestehenden, erfindungsgemäß aufgebauten Gleitlager-Werkstoffs wiedergegeben. Auf dem Stahlrücken (1) befindet sich zusätzlich eine Reinaluminiumschicht (2) von 0,03 mm Dicke, auf die die Aluminium-Lagerwerkstoffschicht (3), bestehend aus 15 Gew.-% Zinn, 1,9 Gew.-% Kupfer, 0,1 Gew.-% Titan, Rest Aluminium, aufplattiert ist.

## Patentansprüche

1. Gleitlager-Werkstotf, aufgebaut aus einer Stützschicht (1) aus Stahl und einer darauf aufplattierten Schicht eines Aluminium-Lagerwerkstoffs (3) aus Aluminium-Kupfer-Matrix mit fein verteilt eingelagertem Zinn, ohne zusätzliche galvanische Gleitschicht, und mit einer Ermüdungsfestigkeit von über 55 N/mm², wobei der Aluminium-Lagerwerkstoff (3) aus
14 - 18 Gew.% Zinn
1,7 - 2,3 Gew.% Kupfer
gegebenenfalls 0,05 - 0,2 Gew.% Titan Rest Aluminium
zusammengesetzt ist, wobei der Gleitlager-Werkstoff nach dem Verbinden eines kaltgewalzten Stahlbands mit dem kaltgewalzten Aluminium-Lagerwerkstoffband in einem Plattierwalzwerk für die Dauer von 2 bis 12 Stunden bei einer Temperatur von 200 bis 220°C wärmebehandelt ist.

2. Gleitlager-Werkstoff nach Anspruch 1, dadurch gekennzeichnet, daß der Lagerwerkstoff (3) noch 0,05 bis 0,2 Gew.-% Titan enthält.

3. Gleitlager-Werkstoff nach einem der Ansprüche 1 und 2, dadurch gekennzeichnet, daß zwischen der Stahlschicht (1) und der Lagerwerkstoffschicht (3) eine Reinaluminiumschicht (2) von 0,01 bis 0,05 mm Dicke angeordnet ist.

## Claims

1. A material for slide bearings, constructed from a supporting layer (1) of steel and a layer, plated thereon, of an aluminium bearing material (3) of aluminium/copper matrix with tin interleaved in a fine distribution, without an additional electroplated sliding layer, and having a fatigue resistance greater than 55 N/mm², the aluminium bearing material (3) being composed of
14 - 18 % by weight of tin
1.7 - 2.3 % by weight of copper
optionally 0.05 - 0.2 % by weight of titanium the remainder being aluminium,
the slide-bearing material being heat-treated for 2 to 12 hours at a temperature of 200 to 220° C after a cold-rolled steel strip has been joined to the cold-rolled aluminium bearing-material strip in a plating rolling mill.

2. A material for slide bearings according to Claim 1, characterized in that the bearing material (3) additionally contains 0.05 to 0.2 % by weight of titanium.

3. A material for slide bearings according to either of Claims 1 and 2, characterized in that a pure aluminium layer (2) having a thickness of 0.01 to 0.05 mm is arranged between the steel layer (1) and the bearing-material layer (3).

## Revendications

1. Matériau pour paliers lisses, composé d'une couche support (1) en acier doublée d'une couche d'un matériau pour paliers à base d'aluminium (3) consistant en une matrice aluminium-cuivre dotée d'inclusions d'étain finement distribuées, sans couche de glissement galvanique supplémentaire et présentant une résistance à la fatigue supérieure à 55 N/mm², le matériau pour paliers à base d'aluminium (3) étant composé de
14 à 18 % en poids d'étain
1,7 à 2,3 % en poids de cuivre
éventuellement 0,05 à 0,2 % en poids de titane le reste étant de l'aluminium
le matériau pour paliers lisses étant soumis à un traitement thermique de 2 à 12 heures à une température comprise entre 200 et 220 °C, après liaison d'un ruban d'acier laminé à froid avec la bande de matériau pour paliers à base d'aluminium laminée à froid dans un laminoir de plaquage.

2. Matériau pour paliers lisses selon la revendication 1, caractérisé en ce que le matériau pour paliers (3) comporte également de 0,05 à 0,2 % en poids de titane.

3. Matériau pour paliers lisses selon la revendication 1 ou 2, caractérisé en ce qu'une couche d'aluminium pur (2) de 0,01 à 0,05 mm d'épaisseur est interposée entre la couche d'acier (1) et la couche de matériau pour paliers (3).
